# FASCICULE DE BREVET EUROPEEN

(11) **EP 1 013 676 B1**
(45) Date de publication et mention de la délivrance du brevet: **21.07.2004**
(21) Numéro de dépôt: 99204343.0
(22) Date de dépôt: 16.12.1999
(51) Int. Cl.: C08F 10/00, C08F 4/622, B01J 19/18, B01J 19/00, B01J 31/22, B01J 31/14, B01J 31/06

(54) **Procédé pour la préparation d'un catalyseur pour la polymérisation des alpha-oléfines**
Verfahren zur Herstellung eines Katalysators für die Polymerisation von Alpha-Olefinen
Process for the preparation of a catalyst for the polymerisation of alpha-olefins

(30) Priorité: 22.12.1998 BE 9800920
(43) Date de publication de la demande: 28.06.2000
(73) Titulaire: SOLVAY POLYOLEFINS EUROPE - BELGIUM (Société Anonyme), 1050 Bruxelles (BE)
(72) Inventeur: Francois, Philippe, 1490 Court-Saint-Etienne (BE); Bettonville, Serge, 4367 Crisnee (BE); Marchand, Dominique, 4671 Saive (BE)
(74) Mandataire: Smith, Julian Philip Howard

(56) Documents cités:
- EP-A- 0 274 109
- EP-A- 0 314 797
- EP-A- 0 598 543
- EP-A- 0 865 821
- US-A- 5 556 893

## Description

La présente invention concerne un procédé pour la préparation d'un catalyseur pour la polymérisation des alpha-oléfines.

Il est connu de polymériser, avec de hauts rendements, les alpha-oléfines au moyen de catalyseurs contenant un composé de métal de transition contenant au moins un radical cyclopentadiényle pouvant être substitué et un activateur choisi parmi les aluminoxanes et les agents ionisants. Toutefois, de tels catalyseurs conduisent à la production de polymères de médiocre morphologie et il s'avère indispensable de les supporter sur des particules poreuses. Les supports les plus utilisés sont les supports inorganiques tels que plus particulièrement les silices. Toutefois ces composés, s'ils permettent le support efficace des constituants du catalyseur, présentent le désavantage de conduire à la formation de polymères contenant des quantités non négligeables de composés inorganiques, appelés généralement cendres, qui diminuent les performances des polymères et plus particulièrement leur processabilité et l'aspect de surface des produits obtenus. En outre, on constate une diminution parfois très importante de la productivité des espèces actives.

L'utilisation de support polymère et plus particulièrement de supports de polyoléfines permet de résoudre partiellement ces problèmes. En effet, un tel support étant compatible avec le polymère final, il conduit, in fine, à des polymères dont la teneur en cendres est particulièrement faible (US-A-5 556 893 - SOLVAY). Toutefois, ces supports étant particulièrement inertes vis-à-vis des espèces actives, ils ne permettent qu'un accrochage partiel de ces dernières. De ce fait, le rendement de la réaction de préparation est diminué, ce qui conduit à des procédés économiquement moins rentables. En outre, on peut observer, en cours de polymérisation, des espèces actives libres qui conduisent à la formation de fines particules de polymères qui perturbent la polymérisation et rendent le polymère final plus difficilement manipulable.

Un tel phénomène est particulièrement important lorsque l'activateur est un aluminoxane. En effet, ces activateurs, du fait de leur viscosité et de leur nature chimique, ne sont que faiblement accrochés au support et ne pénètrent pas dans sa porosité. On obtient ainsi des particules particulièrement visqueuses qui adhèrent aux parois des réacteurs. Ces divers phénomènes expliquent un rendement plus faible de la réaction de préparation des catalyseurs qui est économiquement pénalisant. On a tenté de remédier à ce problème en utilisant des supports de porosité particulière et en soumettant le catalyseur ainsi obtenu à une prépolymérisation en phase gazeuse (EP 598543). Toutefois, le rendement de la réaction de préparation du catalyseur reste insuffisant et il est difficile d'éviter la formation d'agglomérats et de blocs lors de la prépolymérisation en phase gazeuse. Par ailleurs, la réaction de prépolymérisation qui implique la formation de relativement faibles quantités de prépolymère sur un support particulaire est difficile à mettre en oeuvre en phase gazeuse.

On a maintenant trouvé un procédé de préparation de solide catalytique ne présentant pas de tels désavantages.

A cet effet, la présente invention concerne un procédé pour la préparation d'un catalyseur pour la polymérisation des alpha-oléfines dans lequel un composé d'un métal de transition (i) des groupes 4 à 6 du Tableau Périodique contenant au moins un ligand cyclopentadiénique pouvant être substitué et un activateur (ii) choisi parmi les aluminoxanes sont supportés sur un support (iii) constitué de particules poreuses de polyolefine(s) présentant un volume poreux, généré par les pores de rayon de 100 à 7500 nm d'au moins 0,2 cm³/g comprenant une étape au cours de laquelle le support est mis en contact avec une solution contenant l'activateur (ii) pour obtenir une suspension qui est évaporée dans un réacteur muni d'un agitateur comprenant un élément de raclage qui épouse les parois du réacteur de telle manière que la distance entre les bords de cet élément les plus proches des parois du réacteur et lesdites parois soit de 2 à 200 fois le diamètre moyen des particules du support (iii).

Selon la présente invention, on entend par alpha-oléfines, les oléfines à insaturation terminale contenant de 2 à 20, de préférence de 2 à 8 atomes de carbone telles que plus particulièrement l'éthylène, le propylène, le 1-butène, le 1-pentène, le 1-hexène, le 1-octène.

Les catalyseurs préparés selon la présente invention sont obtenus en supportant le composé de métal de transition (i) et l'activateur (ii) sur le support (iii). Il va de soi que des constituants différents des composés (i) et (ii) peuvent être supportés sur le support (iii). De même, plusieurs composés (i) et/ou (ii) peuvent être supportés sur un même support.

Le composé de métal de transition (i) utilisable selon la présente invention est le plus souvent choisi parmi les composés de formules

Qa (C₅H_{5-a-b}R¹ _{b})( C₅H_{5-a-c}R² _{c}) Me X Y (1)

Sa (C₅H_{5-a-d}R³ _{d}) Z Me X Y (2)

dans lesquelles
- Q représente un groupe de liaison qui assure la réticulation des deux ligands cyclopentadiéniques,
- S représente un groupe de liaison qui assure la réticulation du ligand cyclopentadiénique et du groupe Z,
- a vaut 0 ou 1,
- b, c et d sont des nombres entiers satisfaisant aux conditions 0≤b≤5, 0≤c≤5 et 0≤d≤5 quand a vaut 0 et 0≤b≤4, 0≤c≤4 et 0≤d≤4 quand a vaut 1,
- R¹, R² et R³ sont chacun des radicaux hydrocarbonés contenant de 1 à 20 atomes de carbone pouvant être reliés au ligand cyclopentadiénique sous la forme d'un radical monovalent ou pouvant être reliés l'un à l'autre de manière à former un cycle adjacent au cycle cyclopentadiénique, des atomes d'halogène, des groupes alcoxy ayant de 1 à 12 atomes de carbone, des groupes hydrocarbonés contenant du silicium de formule -Si(R')(R'')(R'''), des groupes hydrocarbonés phosphorés de formule -P(R')(R''), des groupes hydrocarbonés azotés de formule -N(R')(R'') ou des groupes hydrocarbonés contenant du bore de formule -B(R')(R'') dans lesquelles R', R'' et R''' représentent des groupes hydrocarbonés contenant de 1 à 24 atomes de carbone pour autant que quand b, c ou d vaut 2 ou plus et/ou qu'il existe une pluralité de radicaux R¹, R² ou R³, ces derniers peuvent être identiques ou différents,
- Me est un métal de transition des groupes 4 à 6 du Tableau Périodique,
- Z est un oxygène, un soufre, un groupe alcoxy ou thioalcoxy ayant de 1 à 20 atomes de carbone, un groupe hydrocarboné azoté ou phosphoré ayant de 1 à 40 atomes de carbone ou un groupe hydrocarboné contenant de 1 à 20 atomes de carbone, pour autant qu'une liaison du groupe Z soit liée au groupe S quand a vaut 1, et
- X et Y, identiques ou différents, sont chacun un hydrogène, un halogène, un groupe hydrocarboné, un groupe alcoxy, un groupe amino, un groupe hydrocarboné phosphoré ou un groupe hydrocarboné contenant du silicium ayant de 1 à 20 atomes de carbone. Les composés (i) de formule (1) préférés sont généralement tels que
- Q est un radical alkylène contenant 1 ou 2 atomes de carbone pouvant être substitués par des groupements alkyle ou aryle contenant de 1 à 10 atomes de carbone, un dialkylgermanium ou un dialkylsilicium contenant de 1 à 6 atomes de carbone,
- a vaut 0 ou 1,
- b et c sont des nombres entiers satisfaisant aux conditions 0 ≤ b ≤ 5 et 0 ≤ c ≤ 5 quand a vaut 0 et 0 ≤ b ≤ 4 et 0 ≤ c ≤ 4 quand a vaut 1,
- R¹ et R² sont des radicaux alkyle, alkényle, aryle, alkylaryle, alkénylaryle ou arylalkyle contenant de 1 à 20 atomes de carbone, plusieurs radicaux R¹ et/ou plusieurs radicaux R² pouvant être reliés l'un à l'autre de manière à former un cycle contenant de 4 à 8 atomes de carbone,
- Me est le zirconium, l'hafnium ou le titane,
- X et Y sont des halogènes ou des groupes hydrocarbonés choisis parmi les alkyles, les aryles et les alkényles contenant de 1 à 10 atomes de carbone.

A titre d'exemples particulièrement préférés de ces composés, on peut citer les composés de formule (1) dans laquelle Q est choisi parmi les diméthyl et diphényl silyl et les méthylène et éthylène substitués par des groupes alkyle ou aryle contenant de 1 à 8 atomes de carbone. Des composés de formule (1) qui conviennent particulièrement bien sont les composés dans lesquels les radicaux (C₅H_{5-a-b}R¹_{b}) et ( C₅H_{5-a-c}R²_{c}) sont choisis parmi les groupements cyclopentadiényle, indényle et fluorényle pouvant être substitués.

Les composés (i) de formule (2) préférés sont le plus souvent tels que
- a vaut 1,
- S est un radical alkylène contenant 1 ou 2 atomes de carbone pouvant être substitués par des groupements alkyle ou aryle contenant de 1 à 10 atomes de carbone, un dialkylgermanium ou un dialkylsilicium contenant de 1 à 6 atomes de carbone,
- R³ est un radical alkyle, alkényle, aryle, alkylaryle, alkénylaryle ou arylalkyle contenant de 1 à 20 atomes de carbone, deux radicaux R³ pouvant être reliés l'un à l'autre de manière à former un cycle contenant de 4 à 8 atomes de carbone,
- d est un nombre entier tel que 0 ≤ d ≤ 4,
- Me est le zirconium, l'hafnium ou le titane,
- X et Y sont des halogènes ou des groupes hydrocarbonés choisis parmi les alkyles, les aryles et les alkényles.

Des composés (i) de formule (2) donnant de bons résultats sont les composés dans lesquels le substituant (C₅H_{5-a-d}R³_{d}) est un substituant cyclopentadiényle, indényle ou fluorényle pouvant être substitué et Z est un groupement amino.

L'activateur (ii) est choisi parmi les aluminoxanes. Par aluminoxanes, on entend les composés répondant aux formules R₂Al O - (Al R - O)ₙ - AlR₂ et (-Al R - O - )ₙ₊₂ dans lesquelles n est un nombre de 1 à 40 et R est un groupe alkyle ou aryle contenant de 1 à 12 atomes de carbone. Les composés préférés de ce type sont les méthyl- , éthyl- ou isobutylaluminoxanes.

Le support (iii) utilisable selon la présente invention est constitué de particules poreuses de polyoléfine. Par polyoléfines, on entend les polymères dérivés des alpha-oléfines définies ci-avant ou les copolymères de ces alpha-oléfines entre elles ou avec des dioléfines comprenant de 4 à 18 atomes de carbone. Des polymères dérivés uniquement d'alpha-oléfines conviennent bien. Les supports préférés selon la présente invention sont des homo ou copolymères de l'éthylène et du propylène. Les particules de polyoléfines utilisables comme support ont le plus souvent un diamètre moyen 5 à 500 µm. De préférence, le diamètre moyen est supérieur ou égal à 8 µm et plus particulièrement supérieur ou égal à 15 µm. Les particules dont le diamètre moyen est inférieur ou égal à 200 µm et plus particulièrement inférieur ou égal à 150 µm donnent de bons résultats.

Le volume poreux des particules de support est également une caractéristique essentielle. Les particules de polyoléfines utilisées comme support présentent un volume poreux généré par les pores de rayon de 1000 à 75000 Å (10⁻¹⁰ m) d'au moins 0,2 cm³/g. Des volumes poreux d'au moins 0,3 cm³/g et de préférence d'au moins 0,5 cm³/g donnent de bons résultats.

Les supports (iii) utilisés préférentiellement selon la présente invention sont décrits dans le brevet US-A-5 556 893. Ces supports préférés sont obtenus par polymérisation d'une ou plusieurs alpha-oléfines au moyen d'un solide à base de trichlorure de titane particulier préparé selon un procédé comprenant la mise en contact de tétrachlorure de titane (TiCl₄), prétraité par un composé électrodonneur, avec une composition organoaluminique correspondant à la formule générale

Al R⁶ ₚ (Y')_{q} X'_{3-(p+q)}

dans laquelle
- R⁶ représente un radical hydrocarboné de préférence choisi parmi les radicaux alkyles linéaires ou branchés contenant de 2 à 8 atomes de carbone,
- Y' représente un groupement choisi parmi -OR⁴, -SR⁴ et -NR⁴R⁵ dans lequel R⁴ et R⁵ représentent chacun un radical hydrocarboné contenant de 1 à 35 atomes de carbone ou un atome d'hydrogène;
- X' représente un halogène;
- p est un nombre quelconque tel que 0 < p ≤ 2,5;
- q est un nombre quelconque tel que 0,5 < q < 3, la somme (p+q) étant telle que 0,5 < (p+q) ≤ 3
de manière à obtenir un matériau liquide qui est ensuite soumis à un traitement thermique réalisé en présence d'un agent halogéné.

La réaction de polymérisation est généralement réalisée dans des conditions telles qu'il se forme de 5 à 3000 g, de préférence de 15 à 500 g de polymère par g de composé catalytique à base de trichlorure de titane.

De tels supports présentent l'avantage d'avoir la morphologie souhaitée sans devoir subir de traitement(s) ultérieur(s). Particulièrement économiques, ils possèdent simultanément une porosité et une résistance mécanique à l'abrasion très élevées qui permet leur utilisation dans les réacteurs munis des agitateurs définis ci-après. Soumis aux mêmes conditions, les supports de l'art antérieur et plus particulièrement les supports de silice ne conservent pas leur morphologie.

Selon le procédé de l'invention, les particules de support sont mises en contact avec une solution contenant l'activateur (ii) pour obtenir une suspension qui est ensuite évaporée dans un réacteur muni d'un agitateur comprenant un élément de raclage qui épouse les parois du réacteur de telle manière que la distance entre les bords de cet élément les plus proches des parois du réacteur et lesdites parois soit de 2 à 200 fois le diamètre moyen des particules du support. De préférence cette distance est d'au moins 4 fois et plus particulièrement d'au moins 10 fois le diamètre moyen des particules de support. Une distance d'au plus 100 fois et de préférence d'au plus 50 fois le diamètre moyen des particules donne de bons résultats. Une distance d'au plus 30 fois le diamètre moyen des particules convient bien.

Dans le procédé selon l'invention, il est préférable que, lorsque l'agitateur est en mouvement, les bords de l'élément de raclage les plus proches des parois du réacteur épousent plus de 50%, de préférence plus de 60% et plus particulièrement plus de 70% de la surface du réacteur en contact avec la suspension. L'utilisation d'un tel agitateur lors de l'évaporation du solvant empêche le croûtage des particules sur les parois du réacteur. Un tel croûtage est particulièrement important lorsque l'activateur (ii) est un composé aluminoxane et qu'un agitateur différent de celui de l'invention est utilisé. La géométrie de l'élément de raclage n'est pas critique pour autant qu'elle satisfasse les conditions décrites ci-avant. On préfère toutefois que l'élément de raclage ait la forme d'une ancre épousant les parois du réacteur. Il est également favorable que l'agitateur comprenne un ou plusieurs éléments assurant une homogénéisation efficace de la suspension en cours d'évaporation. De tels éléments sont favorablement constitués de plaques attachées à l'axe de l'agitateur. Dans certains cas, et plus particulièrement lorsque la quantité de suspension à évaporer est importante, ces plaques peuvent présenter un angle généralement compris entre 25 et 155° avec l'axe de l'agitateur.

Dans le procédé selon l'invention la vitesse de rotation de l'agitateur n'est pas critique. On préfère toutefois qu'elle soit supérieure ou égale à 5, de préférence supérieure ou égale à 10 tr/min. Des vitesses d'agitation inférieures ou égales à 400 et de préférence d'au plus 250 tr/min conviennent bien.

La solution contenant l'activateur (ii) est généralement préparée à partir d'hydrocarbures aliphatiques, cycloaliphatiques liquides pouvant être halogénés ou d'hydrocarbures aromatiques liquides. A titres d'exemples préférés de ces solvants, on peut citer le benzène, le toluène, le xylène, l'hexane, l'heptane, l'octane, la décaline, le dichlorométhane, le dichloroéthane, le chloropropane, et le chlorobenzène. La concentration de l'activateur (ii) dans la solution n'est généralement pas critique. Le plus souvent, l'activateur (ii) est présent à une concentration de 0,1 à 60 % en poids par rapport au poids total de solvant. De préférence, la concentration minimale d'activateur est d'au moins 1 % et plus particulièrement d'au moins 3 % en poids par rapport au poids total de solvant. Cette concentration est outre le plus souvent inférieure ou égale à 50 % en poids par rapport au poids de solvant. Des concentrations inférieures ou égales à 30 % en poids donnent de particulièrement bons résultats. La quantité de support mise en oeuvre à cette étape dépend de la quantité d'activateur (ii) que l'on veut déposer sur le support et de la porosité dudit support. De préférence la quantité de support est de 0,5 à 60 % en poids par rapport au poids de solvant. De préférence cette quantité est d'au moins 2 % en poids et plus particulièrement d'au moins 5 % en poids par rapport au poids de solvant. Une quantité d'au plus 50 % en poids et plus particulièrement d'au plus 30 % en poids par rapport au poids du solvant convient bien.

Dans le procédé selon l'invention, la suspension contenant l'activateur (ii) et les particules de support (iii) est évaporée dans un réacteur muni de l'agitateur décrit ci-avant.

L'évaporation du solvant peut se faire selon toutes les méthodes connues à cet effet telles que par exemple l'évaporation sous pression réduite, l'entraînement avec un gaz, l'évaporation sous l'action de la chaleur ou encore la combinaison de ces différents moyens. Les conditions de pression, de température et de durée dépendent du procédé utilisé. Le solvant est le plus souvent évaporé jusqu'à ce que sa concentration dans le catalyseur soit inférieure ou égale à 2 % en poids, de préférence inférieure ou égale à 1 % en poids, par rapport au poids de support.

Le solide catalytique obtenu selon la présente invention contient également un composé de métal de transition (i). La quantité de métal de transition est le plus souvent telle que le rapport atomique entre l'aluminium de l'aluminoxane et le métal du composé (i) est de 20 à 5000. De préférence ce rapport est d'au moins 50, plus particulièrement d'au moins 100. On obtient de bons résultats lorsque ce rapport est d'au moins 200. Le plus souvent le composé de métal de transition est mis en oeuvre dans des quantités telles que le rapport atomique aluminium / métal de transition est d'au plus 2000 et plus particulièrement d'au plus 1500. Des rapports d'au plus 1000 donnent de bons résultats.

Les quantités respectives des composés (i), (ii) et (iii) ne sont pas critiques. Le plus souvent, le solide catalytique contient de 0,0001 à 0,5 g de composé (i) par gramme de support (iii). De préférence, la concentration en composé (i) est d'au moins 0,0005 et plus particulièrement d'au moins 0,001 g par gramme de support (iii). Des quantités de composé (i) inférieures ou égales à 0,3 et préférentiellement inférieures ou égales à 0,1 g par gramme de support donnent de bons résultats.

Le composé (i) de métal de transition peut être introduit dans la suspension décrite ci-avant. Il peut également avoir été incorporé au support avant sa mise en oeuvre. Enfin, il peut être mis en contact avec les particules de support comprenant l'activateur (ii). Le procédé préféré selon l'invention comprend la préparation d'une solution contenant le composé de métal de transition (i) et l'activateur (ii) à laquelle on ajoute le support (iii) de manière à former une suspension qui est ensuite évaporée.

Le rendement du procédé de préparation du catalyseur selon la présente invention est particulièrement élevé. On observe en effet que le procédé selon l'invention permet d'obtenir une poudre sèche de bonne coulabilité avec un rendement d'au moins 90 % et plus particulièrement d'au moins 95 % des composés mis en oeuvre. En outre, on remarque que plus de 90 %, le plus souvent plus de 95 %, et plus particulièrement plus de 98 % du composé (i) mis en oeuvre sont incorporés dans le support (iii). On remarque également de manière étonnante que plus de 85 % en poids, généralement plus de 90 % en poids et plus particulièrement plus de 95 % en poids d'activateur (ii) mis en oeuvre sont incorporés dans le support (iii).

Le solide catalytique ainsi obtenu se présente sous la forme d'une poudre sèche de bonne coulabilité. Les particules de catalyseur présentent la même morphologie que les supports qui leur ont donné naissance. Le solide catalytique peut être utilisé tel quel pour la polymérisation des alpha-oléfines. Il peut également être utilisé sous forme d'une suspension dans un diluant adapté à sa mise en oeuvre.

Selon une variante particulièrement avantageuse, le solide catalytique ainsi obtenu est soumis à une polymérisation préliminaire au cours de laquelle il est mis en contact avec au moins une alpha-oléfine, dans des conditions polymérisantes, dans un diluant dont la viscosité cinématique (mesurée à 20°C) est de 3 à 3000 cSt (centistockes) (mm²/s) de manière à former de 0,01 à 50 g de polyoléfine par g de catalyseur contenant les composés (i), (ii) et (iii). De préférence le diluant mis en oeuvre lors de l'étape de polymérisation préliminaire a une viscosité cinématique (mesurée à 20°C) d'au moins 5 cSt (mm²/s) et plus particulièrement d'au moins 10 cSt (mm²/s). Des diluants dont la viscosité cinématique est d'au plus 1000 et plus particulièrement d'au plus 500 cSt (mm²/s) conviennent bien. Le diluant est en outre le plus souvent choisi parmi les huiles minérales. Par huiles minérales, on entend désigner les produits possédant la viscosité cinématique décrite ci-avant et qui sont d'origine minérale. Ces huiles peuvent être par exemple des huiles légères, moyennes ou lourdes provenant de la distillation des goudrons de houille ou encore des huiles obtenues au cours de la distillation fractionnée du pétrole. Ces dernières sont particulièrement préférées et, parmi elles, les huiles qui sont des mélanges d'hydrocarbures distillant de 225 à 400 °C environ. Des exemples typiques de ces huiles sont les huiles ONDINA® 15 à 68 commercialisées par SHELL ou leurs équivalents. On obtient de particulièrement bons résultats lorsque le diluant ne solubilise pas les composés (i). Par diluant ne solubilisant pas le composé (i), on entend des diluants dans lesquels, en fin de polymérisation préliminaire, la concentration maximale du composé (i), dans les conditions normales de pression et de température, n'excède pas 100 ppm, de préférence pas 5 ppm.

L'alpha-oléfine mise en oeuvre au cours de l'étape de polymérisation préliminaire est avantageusement choisie parmi les alpha-oléfines contenant de 2 à 4 atomes de carbone. L'éthylène et le propylène conviennent particulièrement bien. La quantité de polymère formée lors de l'étape de polymérisation préliminaire est le plus souvent d'au moins 0,05 et plus particulièrement d'au moins 0,1 g de polyoléfine par g de catalyseur contenant les composés (i), (ii) et (iii). On obtient de bons résultats lorsque cette quantité est inférieure ou égale à 30 g, de préférence d'au plus 10 g par g de catalyseur contenant les composés (i), (ii) et (iii). La polymérisation préliminaire est donc réalisée en suspension dans ledit diluant.

Dans cette étape de polymérisation préliminaire, le monomère est le plus souvent mis en oeuvre à une pression partielle d'environ 0,1 à environ 10 kg/cm². Cette pression partielle est ensuite maintenue constante par introduction de monomère jusqu'à ce qu'on ait polymérisé la quantité souhaitée de monomère. De préférence la pression partielle de monomère est supérieure ou égale à environ 0,2 kg/cm² et plus particulièrement supérieure ou égale à environ 0,5 kg/cm². Le plus souvent cette pression partielle est inférieure ou égale à 5 kg/cm² et plus particulièrement inférieure ou égale à 3 kg/cm². La durée de la polymérisation préliminaire peut varier d'environ 1 minute à environ 15 heures, des durées d'environ 5 minutes à environ 5 heures étant plus couramment utilisées. La température de la polymérisation préliminaire est le plus souvent d'environ 0 à environ 100 °C, plus particulièrement d'environ 10 à environ 85 °C. Il peut également s'avérer avantageux d'introduire lors de la polymérisation préliminaire un agent connu de régulation de la masse moléculaire des polymères tel que par exemple l'hydrogène. Dans certains cas également, plus d'une alpha-oléfine sont mises en oeuvre à la polymérisation préliminaire. On préfère toutefois ne mettre qu'une alpha-oléfine en oeuvre à cette étape.

Un procédé de préparation particulier selon la présente invention comprend la mise en contact du support (iii) avec une solution contenant le composé de métal de transition (i) et l'activateur (ii) de manière à obtenir une suspension qui est évaporée dans un réacteur muni d'un agitateur comprenant un élément de raclage qui épouse les parois du réacteur de telle manière que la distance entre les bords de cet élément les plus proches des parois du réacteur et lesdites parois soit de 4 à 50 fois le diamètre moyen du support, ledit agitateur comprenant également un élément assurant l'homogénéisation de la suspension, pour obtenir un solide pulvérulent qui est ensuite soumis à une polymérisation préliminaire au cours de laquelle il est mis en contact avec une alpha-oléfine contenant de 2 à 4 atomes de carbone dans une huile minérale ayant une viscosité cinématique (mesurée à 20°C) de 20 à 300 cSt (de 10 à 300 mm²/s) pour former de 0,1 à 20 g de polyoléfine par g de catalyseur contenant les composés (i), (ii) et (iii).

Les solides catalytiques ainsi obtenus sont avantageusement utilisés pour la polymérisation des alpha-oléfines tels quels (c'est-à-dire sous la forme de la suspension ayant subi la polymérisation préliminaire) ou après élimination partielle ou totale du diluant. Ils peuvent également être mis en oeuvre après avoir été lavés par un diluant hydrocarboné inerte choisi préférentiellement parmi les hydrocarbures aliphatiques, cycloaliphatiques et aromatiques liquides tels que les alcanes, isoalcanes, cycloalcanes liquides, le benzène et le toluène. Ils présentent l'avantage d'avoir une activité particulièrement élevée. En effet, on observe de manière étonnante que ces catalyseurs ont une activité très proche et même souvent égale à celle obtenue en ne supportant pas l'espèce active. Par ailleurs, l'utilisation de ces catalyseurs permet l'obtention de polymères ayant une très belle morphologie et dont le taux de fines particules (particules ayant un diamètre inférieur ou égal à 100 µm) est très faible, le plus souvent inférieur à 0,5 % en poids et plus particulièrement inférieur à 0,1 % en poids par rapport au poids total de polymère. On obtient un tel taux de fines même lorsque le rendement de la réaction de polymérisation conduit à un polymère contenant moins de 0,2 ppm de métal de transition.

Le procédé de polymérisation peut être réalisé en continu ou en discontinu, selon n'importe quel procédé connu, en solution ou en suspension dans un diluant hydrocarboné, en suspension dans le, ou un des monomères maintenu à l'état liquide ou encore en phase gazeuse. La température de polymérisation est le plus souvent de -20 °C à + 150 °C. La pression est de préférence choisie entre la pression atmosphérique et 100 10⁵ Pa, plus particulièrement entre 10 et 55 10⁵ Pa. La masse moléculaire des polymères fabriqués peut être réglée par addition d'un ou plusieurs agents de réglage de la masse moléculaire des polyoléfines tels que plus particulièrement l'hydrogène.

Par ailleurs, il peut également s'avérer préférable d'introduire dans le milieu de polymérisation un ou plusieurs composés organoaluminiques permettant d'améliorer l'activité du catalyseur et/ou de capter les poisons de la réaction de polymérisation. Ces composés peuvent être des aluminoxanes tels que décrits ci-avant ou des composés organoaluminiques répondant à la formule Rₘ AlX'₃₋ₘ ou Rₘ AlOR⁷₃₋ₘ dans lesquelles R et X' sont des radicaux tels que définis ci-avant, R⁷ est un radical hydrocarboné contenant de 1 à 20 atomes de carbone et m est un nombre tel que 0≤m≤3. Des composés organoaluminiques préférés sont les trialkylaluminiums, les halogénures d'alkylaluminium et les aluminoxanes.

Un procédé de polymérisation particulièrement intéressant concerne l'homo et la copolymérisation de l'éthylène et du propylène.

Lorsque la polymérisation du propylène est effectuée en suspension dans le monomère liquide ou en phase gazeuse, il s'avère avantageux d'effectuer une première étape de polymérisation, distincte de l'étape de polymérisation préliminaire et appelée étape de prépolymérisation, dans le monomère liquide à une température de 0 à 60°C, au cours de laquelle on forme de 10 à 1000 g de polymère par g de solide catalytique contenant les composés (i), (ii) et (iii).

Une telle étape de prépolymérisation est également avantageuse lorsqu'on polymérise de l'éthylène dans un diluant hydrocarboné choisi parmi les hydrocarbures aliphatiques contenant de 3 à 10 atomes de carbone ou en phase gazeuse. Dans ce cas, la prépolymérisation est effectuée dans un diluant choisi parmi les hydrocarbures aliphatiques contenant de 3 à 10 atomes de carbone, à une température de 0 à 60 °C.

La quantité de prépolymère est le plus souvent de 10 à 1000 g de polymère par g de solide catalytique contenant les composés (i), (ii) et (iii).

D'une manière générale, la quantité de prépolymère formée est le plus souvent d'au moins 20 plus particulièrement d'au moins 50 g par g de solide catalytique contenant les composés (i), (ii) et (iii). On obtient de bons résultats lorsque la quantité de prépolymère est d'au plus 700 plus particulièrement d'au plus 400 g par g de solide catalytique contenant les composés (i), (ii) et (iii). De préférence la prépolymérisation est effectuée à une température de 20 à 50°C.

Un avantage des procédés comprenant une telle étape est que la morphologie du polymère est conservée même lorsque l'étape de polymérisation est effectuée à haute température.

Les exemples suivants servent à illustrer l'invention. La signification des symboles utilisés dans ces exemples, les unités exprimant les grandeurs mentionnées et les méthodes de mesure de ces grandeurs sont explicitées ci-dessous.

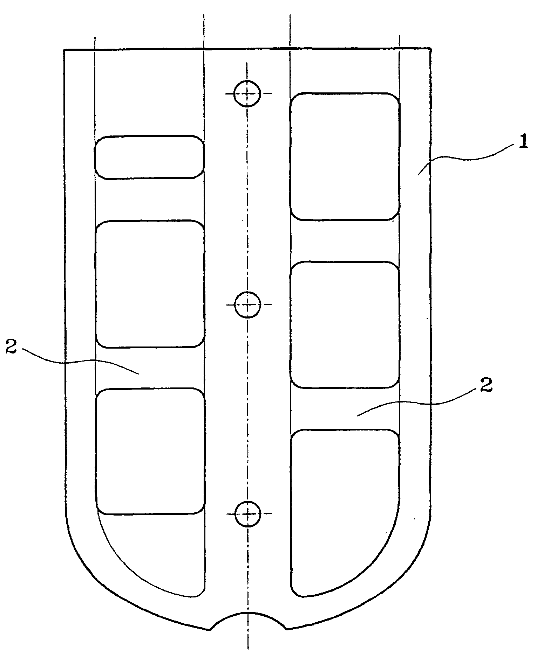

La figure 1 montre un exemple d'agitateur utilisable dans le procédé selon l'invention. Cet agitateur comprend un élément de raclage - 1 - en forme d'ancre. La distance entre les bords de cet agitateur les plus proches des parois du réacteur et lesdites parois est de 1 mm. Lors de la rotation de l'agitateur, les bords de cet élément épousent plus de 95 % de la surface du réacteur en contact avec la suspension. L'agitateur est également muni de pales - 2 - assurant l'homogénéisation de la suspension. Ces pales sont disposées verticalement et sont reliées à l'élément de raclage.

La porosité des supports (iii) est déterminée par la méthode de pénétration de mercure au moyen de porosimètres commercialisés par CARLO ERBA CO. dans la zone des rayons de pores 75 à 75000 Å (10⁻¹⁰ m). On obtient ainsi la courbe du volume poreux exprimée en cm³/g en fonction du diamètre des pores à partir de laquelle on détermine le volume poreux généré par les pores de rayons de 1000 à 75000 Å (10⁻¹⁰ m).

Le diamètre moyen des particules de support est le diamètre médian des particules mesuré, à partir d'une suspension dans le 2-propanol, selon la norme NFX11-666 (1984) sur un appareil MALVERN® modèle Mastersizer MS1000.
- Ds =: diamètre moyen des particules de support en µm.
- VPs =: volume poreux interne du support généré par les pores de rayon de 1000 à 75000 Å (10⁻¹⁰ m) exprimé en cm³/g.
- α =: activité catalytique exprimée conventionnellement en kg de polymère insoluble dans le milieu de polymérisation, obtenus par milimole de métal contenu dans le composé (i). Cette activité est appréciée indirectement à partir de la détermination de la teneur résiduelle en métal dans le polymère par Inductively Coupled Plasma Mass Spectrometry (ICP-MS) sur un appareil MICROMASS® Plasma Trace 1.
- Prod =: quantité de polymère formée lors des essais de polymérisation exprimée en g de polymère par g de catalyseur.
- PSA =: poids spécifique apparent de la fraction de polymère insoluble exprimé en g/dm³.
- FTri =: indice d'isotacticité du polymère de propylène, apprécié par la fraction molaire de triades isotactiques (enchaînement séquencé de trois unités monomériques de propylène en configuration méso) dans le polymère total. Cette valeur est déterminée par résonance magnétique nucléaire en ¹³C comme décrit dans Macromolecules, volume 6, n° 6, page 925 (1973).
- MFI =: indice de fluidité en fondu mesuré sous une charge de 2,16 kg à 230 °C et exprimé en g/10 min (norme ASTM D 1238 (1986)).
- MI =: indice de fluidité en fondu mesuré sous une charge de 2,16 kg à 190 °C et exprimé en g/10 min (norme ASTM D 1238 (1986)).
- HLMI =: indice de fluidité en fondu mesuré sous une charge de 21,6 kg à 190 °C et exprimé en g/10 min (norme ASTM D 1238 (1986)).
- HLMI/MI =: mesure de la distribution des poids moléculaires des polymères.

### Exemple 1

### A. Préparation du catalyseur

Dans un réacteur de 0,8 1, préalablement conditionné, muni d'un agitateur tel que décrit ci-avant en rapport avec la figure 1, on introduit successivement 1,12 g de diméthylsilyl-1,1-bis(2-méthyl-4,5-benzoindényle) ZrCl₂ [composé (i)] et 50 ml de toluène. Ensuite on ajoute, goutte à goutte et sous agitation, 500 ml d'une solution de méthylaluminoxane (composé (ii)) à 10 % en poids dans du toluène et 50 g d'un support de polypropylène (composé (iii)) préparé comme décrit à l'exemple 1 du brevet US-A-5556893 et caractérisé par un Ds de 100 et un VPS de 0,93. La distance entre les bords de l'agitateur les plus proches des parois du réacteur et lesdites parois est donc de 10 fois le diamètre moyen des particules de support.

La suspension ainsi obtenue est ensuite portée à 65 °C et évaporée sous agitation et sous un courant d'azote jusqu'à obtention d'une poudre sèche de bonne coulabilité. Cette étape d'évaporation dure environ 10 heures et est considérée comme complète lorsque la concentration en solvant dans l'azote à la sortie du réacteur est inférieure à 50 ppm. A température ambiante on prélève 4,4 g de poudre à des fins d'analyse. La teneur en zirconium de cette poudre mesurée par fluorescence X est de 2,3 g/kg.

Le reste de la poudre est alors mis en suspension sous balayage d'azote dans 518,8 g d'huile minérale ONDINA® 32 commercialisée par SHELL et ayant viscosité cinématique de 90 cSt, de manière à former une suspension à 15 % en poids. On récupère ainsi 598 g de suspension ne contenant ni bloc ni agglomérat et correspondant à 98 % des composés mis en oeuvre. Les parois du réacteur ne présentent pas de traces de croûtage.

### B. Polymérisation du propylène

Dans un autoclave de 5 litres, préalablement séché, on introduit sous balayage d'azote sec 2 mmole de triethyl aluminium et 3 litres de propylène liquide.

Après avoir introduit 1 ml de suspension de catalyseur, on maintient le réacteur à 30°C durant 20 minutes (prépolymérisation), puis on introduit alors une pression partielle d'hydrogène d'environ 0,15 bar avant d'augmenter la température du réacteur à 60°C. Après 1 heure, l'excédent de propylène est dégazé et on récupère, avec une Prod de 1770, du polypropylène sous forme de grains de morphologie régulière dont le PSA est 362 et ne contenant ni particules ayant un diamètre inférieur ou égal à 1000µm ni particules ayant un diamètre inférieur ou égal à 100µm. Les parois du réacteur ne présentent pas de traces croûtages.

### Exemple 2

### A. Préparation du catalyseur

Dans le réacteur décrit à l'exemple 1, on introduit 226 g de la suspension obtenue à l'exemple 1. Le récipient étant maintenu à 25°C, sous atmosphère inerte, on y introduit alors du propylène sous une pression partielle de 1,5 kg/cm². Cette introduction est maintenue pendant environ 35 minutes de manière à incorporer 13,5 ml propylène (polymérisation préliminaire - 0,2 g de polypropylène par gramme de catalyseur contenant les composés (i), (ii) et (iii)).

### B. Polymérisation du propylène

Soumis à un test de polymérisation identique à celui de l'exemple 1, ce catalyseur permet la formation, avec une Prod de 2080, du polypropylène se présentant sous forme de grains de morphologie régulière (PSA 388, pas de particule de diamètre ≤ 1000µm). Les parois du réacteur ne présentent pas de traces croûtages. On observe donc que la polymérisation préliminaire du catalyseur selon l'invention permet d'améliorer à la fois la morphologie du polymère et la productivité de la réaction de polymérisation.

### Exemple 3

### A. Préparation du catalyseur

Dans le réacteur tel que décrit à l'exemple 1, on introduit successivement 0,438 g de diméthylsilyl-1,1-bis(2-méthyl-4,5-benzoindényle) ZrCl₂ [composé (i)] et 50 ml de toluène. Ensuite, on ajoute, goutte à goutte et sous agitation, 150 ml d'une solution de méthylaluminoxane à 10 % en poids dans du toluène et 40 g du support de l'exemple 1.

La suspension ainsi obtenue est ensuite portée à 65 °C et évaporée sous agitation et sous un courant d'azote jusqu'à obtention d'une poudre sèche de bonne coulabilité. Cette étape d'évaporation dure environ 5 heures et est considérée comme complète lorsque la concentration en solvant dans l'azote à la sortie du réacteur est inférieure à 50 ppm. La poudre est alors mise en suspension sous balayage d'azote dans 577 g l'huile minérale ONDINA 32 de manière à former une suspension à 8 % en poids. Le récipient étant maintenu à 25 °C, sous atmosphère inerte, on introduit alors du propylène sous une pression partielle de 1,5 kg/cm². Cette introduction est maintenue pendant environ 60 minutes de manière à incorporer 25 ml propylène (polymérisation préliminaire - 0,2 g de polypropylène par gramme de catalyseur contenant les composés (i), (ii) et (iii)).

### B. Polymérisation du propylène

Le catalyseur obtenu au point A est soumis à un test de polymérisation identique à celui de l'exemple 1 sauf que la quantité de suspension de catalyseur est de 1,5 ml et que la température du réacteur est de 70°C. Le polypropylène formé se présente sous forme de grains de morphologie régulière (PSA 356, pas de particules ayant un diamètre ≤ à 1000µm). La Prod est de 3790 et l'activité, très élevée (α = 456) est similaire à ce qui est décrit dans la littérature pour une polymérisation "homogène" dans des conditions similaires. Les parois du réacteur ne présentent pas de traces croûtages.

### Exemple comparatif 1

L'exemple 1 est reproduit si ce n'est que l'autoclave est muni d'un agitateur traditionnel de type Sabre®. La distance entre les bords de l'agitateur les plus proches des parois du réacteur et lesdites parois est de 10 000 fois le diamètre moyen des particules de support. Le catalyseur ainsi obtenu se présente sous la forme d'un gros bloc.

### Exemple comparatif 2

### A. Préparation du catalyseur

L'exemple 3 point A est reproduit si ce n'est que le support de polypropylène est remplacé par de la silice (S8MY commercialisé par GRACE DAVISON). On constate en fin de préparation, sous le microscope une nette dégradation de la morphologie de la poudre.

### B. Polymérisation du propylène

Soumis à un test de polymérisation identique à celui de l'exemple 3, le catalyseur conduit à un polypropylène présentant une morphologie irrégulière (PSA 320, 47 % de particule ≤ 1000µm dont 1 % ≤ 100µm). La productivité est de 1100 et l'activité relativement faible (α=82).

## Revendications

1. Procédé pour la préparation d'un catalyseur pour la polymérisation des alpha-oléfines dans lequel un composé d'un métal de transition (i) des groupes 4 à 6 du Tableau Périodique contenant au moins un ligand cyclopentadiénique pouvant être substitué et un activateur (ii) choisi parmi les aluminoxanes sont supportés sur un support (iii) constitué de particules poreuses de polyoléfine(s) présentant un volume poreux, généré par les pores de rayon de 100 à 7500 nm d'au moins 0,2 cm³/g, comprenant une étape au cours de laquelle le support (iii) est mis en contact avec une solution contenant l'activateur (ii) pour obtenir une suspension qui est évaporée dans un réacteur muni d'un agitateur comprenant un élément de raclage qui épouse les parois du réacteur de telle manière que la distance entre les bords de cet élément les plus proches des parois du réacteur et lesdites parois soit de 2 à 200 fois le diamètre moyen des particules du support (iii).

2. Procédé selon la revendication 1, dans lequel le composé de métal de transition (i) est choisi parmi les composés de formules
Qₐ (C₅H_{5-a-b}R¹ _{b})( C₅H_{5-a-c}R² _{c}) Me X Y (1)
Sₐ (C₅H_{5-a-d}R³ _{d}) Z Me X Y (2)
dans lesquelles
- Q représente un groupe de liaison qui assure la réticulation des deux ligands cyclopentadiéniques,
- S représente un groupe de liaison qui assure la réticulation du ligand cyclopentadiénique et du groupe Z,
- a vaut 0 ou 1,
- b, c et d sont des nombres entiers satisfaisant aux conditions 0≤b≤5, 0≤c≤5 et 0≤d≤5 quand a vaut 0 et 0≤b≤4, 0≤c≤4 et 0≤d≤4 quand a vaut 1,
- R¹, R² et R³ sont chacun des radicaux hydrocarbonés contenant de 1 à 20 atomes de carbone pouvant être reliés au ligand cyclopentadiénique sous la forme d'un radical monovalent ou pouvant être reliés l'un à l'autre de manière à former un cycle adjacent au cycle cyclopentadiénique, des atomes d'halogène, des groupes alcoxy ayant de à 12 atomes de carbone, des groupes hydrocarbonés contenant du silicium de formule -Si(R')(R")(R"'), des groupes hydrocarbonés phosphorés de formule -P(R')(R"), des groupes hydrocarbonés azotés de formule -N(R')(R'') ou des groupes hydrocarbonés contenant du bore de formule -B(R')(R'') dans lesquelles R', R'' et R''' représentent des groupes hydrocarbonés contenant de 1 à 24 atomes de carbone pour autant que quand b, c ou d vaut 2 ou plus et/ou qu'il existe une pluralité de radicaux R¹, R² ou R³, ces derniers peuvent être identiques ou différents,
- Me est un métal de transition des groupes 4 à 6 du Tableau Périodique,
- Z est un oxygène, un soufre, un groupe alcoxy ou thioalcoxy ayant de 1 à 20 atomes de carbone, un groupe hydrocarboné azoté ou phosphoré ayant de 1 à 40 atomes de carbone ou un groupe hydrocarboné contenant de 1 à 20 atomes de carbone, pour autant qu'une liaison du groupe Z soit liée au groupe S quand a vaut 1, et
- X et Y, identiques ou différents, sont chacun un hydrogène, un halogène, un groupe hydrocarboné, un groupe alcoxy, un groupe amino, un groupe hydrocarboné phosphoré ou un groupe hydrocarboné contenant du silicium ayant de 1 à 20 atomes de carbone.

3. Procédé selon la revendication 1 ou 2, dans lequel le support (iii) est obtenu par polymérisation d'une ou plusieurs alpha-oléfines au moyen d'un solide à base de trichlorure de titane particulier préparé selon un procédé comprenant la mise en contact de tétrachlorure de titane (TiCl₄), prétraité par un composé électrodonneur, avec une composition organoaluminique correspondant à la formule générale
Al R⁶ ₚ (Y')_{q} X'_{3-(p+q)}
dans laquelle
- R⁶ représente un radical hydrocarboné de préférence choisi parmi les radicaux alkyles linéaires ou branchés contenant de 2 à 8 atomes de carbone,
- Y' représente un groupement choisi parmi -OR⁴, -SR⁴ et -NR⁴R⁵ dans lequel R⁴ et R⁵ représentent chacun un radical hydrocarboné contenant de 1 à 35 atomes de carbone ou un atome d'hydrogène;
- X' représente un halogène;
- p est un nombre quelconque tel que 0 < p ≤ 2,5;
- q est un nombre quelconque tel que 0,5 < q < 3, la somme (p+q) étant telle que 0,5 < (p+q) ≤ 3
de manière à obtenir un matériau liquide qui est ensuite soumis à un traitement thermique réalisé en présence d'un agent halogéné.

4. Procédé selon l'une quelconque des revendications 1 à 3, dans lequel le support (iii) a été mis en contact avec une solution contenant le composé de métal de transition (i) et l'activateur (ii) de manière à obtenir une suspension qui a ensuite été évaporée.

5. Procédé selon l'une quelconque des revendications 1 à 4, dans lequel le support (iii) est mis en contact avec une solution contenant le composé de métal de transition (i) et l'activateur (ii) de manière à obtenir une suspension qui est évaporée dans un réacteur muni d'un agitateur comprenant un élément de raclage qui épouse les parois du réacteur de telle manière que la distance entre les bords de cet élément les plus proches des parois du réacteur et lesdites parois soit de 4 à 50 fois le diamètre moyen du support, ledit agitateur comprenant également un élément assurant l'homogénéisation de la suspension, pour obtenir un solide pulvérulent.

## Claims

1. Process for the preparation of a catalytst for the polymerisation of alpha-olefins, in which a compound of a transition metal (i) of Groups 4 to 6 of the Periodic Table containing at least one cyclopentadiene ligand capable of being substituted and an activator (ii) chosen from aluminoxanes are supported on a support (iii) composed of porous particles of polyolefin(s) having a pore volume generated by the pores with a radius of 100 to 7500 nm of least 0.2 cm³g, comprising a stage during which the support is placed in contact with a solution containing the activator (ii) in order to obtain a suspension which is evaporated in a reactor fitted with an agitator comprising a scraper element which hugs the walls of the reactor in such a way that the distance between the edges of said element that are closest to the walls of the reactor and said walls is from 2 to 200 times the mean diameter of the particles of the support (iii).

2. Process according to claim 1, in which the transition metal compound (i) is chosen from compounds with the formulas
Qₐ (C₅H_{5-a-b}R¹ _{b})(C₅H_{5-a-c}R² _{c}) Me X Y (1)
Sₐ (C₅H_{5-a-d}R³d) Z Me X Y (2)
in which:
- Q represents a linking group which undertakes the cross-linking of the two cyclopentadiene ligands,
- S represents a linking group which undertakes the cross-linking of the cyclopentadiene ligand and the Z group,
- a equals 0 or 1,
- b, c and d are whole numbers meeting the conditions 0≤b≤5, 0≤c≤5 and 0≤d≤5 when a equals 0 and 0≤b≤4, 0≤c≤4 and 0≤d≤4 when a equals 1,
- R¹, R² and R³ are each hydrocarbon radicals containing from 1 to 20 carbon atoms capable of being linked to the cyclopentadiene ligand in the form of a monovalent radical or capable of being linked to one another so as to form a ring adjacent to the cyclopentadiene ring, halogen atoms, alkoxy groups having from 1 to 12 carbon atoms, hydrocarbon groups containing silicon with the formula -Si(R')(R")(R"'), phosphorated hydrocarbon groups with the formula -P(R')(R"), nitrogenous hydrocarbon groups with the formula -N(R')(R") or hydrocarbon groups containing boron with the formula -B(R')(R") in which R', R" and R"' represent hydrocarbon groups containing from 1 to 24 carbon atoms provided that when b, c or d equals 2 or more and/or when a plurality of R¹, R² or R³ radicals exists, the latter can be identical or different,
- Me is a transition metal of Groups 4 to 6 of the Periodic Table,
- Z is an oxygen, a sulfur, an alkoxy or thioalkoxy group having from 1 to 20 carbon atoms, a nitrogenous or phosphorated hydrocarbon group having from 1 to 40 carbon atoms or a hydrocarbon group containing from 1 to 20 carbon atoms, provided that a bond of the Z group is bonded to the S group when a equals 1, and
- X and Y, identical or different, are each a hydrogen, a halogen, a hydrocarbon group, an alkoxy group, an amino group, a phosphorated hydrocarbon group or a hydrocarbon group containing silicon having from 1 to 20 carbon atoms.

3. Process according to claim 1 or 2, in which the support (iii) is obtained by the polymerisation of one or more alpha-olefins by means of a special titanium trichloride-based solid prepared according to a process comprising the placing of titanium tetrachloride (TiCl₄) pre-treated with an electron-donor compound in contact with an organoaluminium compound corresponding to the general formula
Al R⁶ ₚ(Y')_{q}X'_{3-(p+q)}
in which
- R⁶ represents a hydrocarbon radical chosen preferably from linear or branched alkyl radicals containing from 2 to 8 carbon atoms,
- Y' represents a group chosen from -OR⁴, -SR⁴ and -NR⁴R⁵ in which R⁴ and R⁵ each represent a hydrocarbon radical containing from 1 to 35 carbon atoms or a hydrogen atom;
- X' represents a halogen;
- p is any number such that 0 < p ≤ 2.5;
- q is any number such that 0.5 < q < 3, the sum (p+q) being such that 0.5 < (p+q) ≤ 3
so as to obtain a liquid material which is then subjected to a thermal treatment carried out in the presence of a halogenated agent.

4. Process according to any one of claims 1 to 3, in which the support (iii) has been placed in contact with a solution containing the transition metal compound (i) and the activator (ii) so as to obtain a suspension which has then been evaporated.

5. Process according to any one of claims 1 to 4, in which the support (iii) is placed in contact with a solution containing the transition metal compound (i) and the activator (ii) so as to obtain a suspension which is evaporated in a reactor fitted with an agitator comprising a scraper element which hugs the walls of the reactor in such a way that the distance between the edges of said element that are closest to the walls of the reactor and said walls is from 4 to 50 times the mean diameter of the support, said agitator comprising also an element ensuring the homogenisation of the suspension, in order to obtain a powdery solid.

## Patentansprüche

1. Verfahren zur Herstellung eines Katalysators für die Polymerisation von alpha-Olefinen, bei dem eine Verbindung eines Übergangsmetalls (i) der Gruppen 4 bis 6 des Periodensystems, die wenigstens einen Cyclopentadienliganden, der substituiert sein kann, und ein Aktivator (ii), der unter den Aluminoxanen ausgewählt ist, auf einem Träger (iii) gebunden sind, der aus porösen Teilchen von Polyolefin(en) besteht, die ein Porenvolumen, erzeugt von den Poren mit einem Radius von 100 bis 7500 nm, von wenigstens 0,2 cm³/g aufweisen, umfassend einen Schritt, in dessen Verlauf der Träger (iii) in Kontakt mit einer Lösung gebracht wird, die den Aktivator (ii) enthält, um eine Suspension zu erhalten, die in einem Reaktor eingedampft wird, der ausgestattet ist mit einem Rührer, der ein Abstreifelement umfasst, das sich an die Reaktorwände so anpasst, dass der Abstand zwischen den Rändern dieses Elements, die den Reaktorwänden am nächsten sind, und besagten Wänden das 2-bis 200-fache des mittleren Durchmessers der Trägerteilchen (iii) ist.

2. Verfahren gemäß Anspruch 1, bei dem die Übergangsmetallverbindung (i) ausgewählt ist unter den Verbindungen der Formeln
Qₐ(C₅H_{5-a-b}R¹ _{b})(C₅H_{5-a-c}R² _{c})MeXY (1)
Sₐ(C₅H_{5-a-d}R³ _{d})ZMeXY (2)
worin
- Q eine Bindungsgruppe, die die Vernetzung der beiden Cyclopentadienliganden sicherstellt, darstellt,
- S eine Bindungsgruppe, die die Vernetzung des Cyclopentadienliganden und der Gruppe Z sicherstellt, darstellt,
- a 0 oder 1 beträgt,
- b, c und d ganze Zahlen sind, die die Bedingungen 0 ≤ b ≤ 5, 0 ≤ c ≤ 5 und 0 ≤ d ≤ 5, wenn a 0 beträgt, und 0 ≤ b ≤ 4, 0 ≤ c ≤ 4 und 0 ≤ d ≤ 4, wenn a 1 beträgt, erfüllen,
- R¹, R² und R³ jeweils Kohlenwasserstoffreste mit 1 bis 20 Kohlenstoffatomen, die an den Cyclopentadienliganden in der Form eines einwertigen Restes gebunden sein können oder aneinander gebunden sein können, so dass sie einen Ring bilden, der an den Cyclopentadienring angrenzt, Halogenatome, Alkoxygruppen mit 1 bis 12 Kohlenstoffatomen, Silicium enthaltende Kohlenwasserstoffgruppen der Formel -Si(R')(R")(R'"), phosphorhaltige Kohlenwasserstoffgruppen der Formel -P(R')(R"), stickstoffhaltige Kohlenwasserstoffgruppen der Formel -N(R')(R") oder Bor enthaltende Kohlenwasserstoffgruppen der Formel -B(R')(R") sind, worin R', R" und R'" Kohlenwasserstoffgruppen mit 1 bis 24 Kohlenstoffatomen darstellen, insoweit, als diese Letzteren gleich oder verschieden sein können, wenn b, c oder d 2 oder mehr beträgt und/oder eine Vielzahl an Resten R¹, R² oder R³ existiert,
- Me ein Übergangsmetall der Gruppen 4 bis 6 des Periodensystems ist,
- Z ein Sauerstoff, ein Schwefel, eine Alkoxy- oder Thioalkoxygruppe mit 1 bis 20 Kohlenstoffatomen, eine stickstoffhaltige oder phosphorhaltige Kohlenwasserstoffgruppe mit 1 bis 40 Kohlenstoffatomen oder eine Kohlenwasserstoffgruppe mit 1 bis 20 Kohlenstoffatomen ist, sofern eine Bindung der Gruppe Z an die Gruppe S gebunden ist, wenn a 1 beträgt, und
- X und Y, die gleich oder verschieden sind, jeweils ein Wasserstoff, ein Halogen, eine Kohlenwasserstoffgruppe, eine Alkoxygruppe, eine Aminogruppe, eine phosphorhaltige Kohlenwasserstoffgruppe oder eine Silicium enthaltende Kohlenwasserstoffgruppe mit 1 bis 20 Kohlenstoffatomen sind.

3. Verfahren gemäß Anspruch 1 oder 2, bei dem der Träger (iii) durch Polymerisation eines oder mehrerer alpha-Olefine mittels eines Feststoffs auf der Basis von speziellem Titantrichlorid erhalten wird, das gemäß einem Verfahren hergestellt wird, das das Inkontaktbringen von Titantetrachlorid (TiCl₄), vorbehandelt mit einer Elektronendonorverbindung, mit einer aluminiumorganischen Zusammensetzung umfasst, die der allgemeinen Formel
AIR⁶ ₚ(Y')_{q}X'_{3-(p+q)}
entspricht, worin
- R⁶ einen Kohlenwasserstoffrest darstellt, der vorzugsweise ausgewählt ist unter den linearen oder verzweigten Alkylresten mit 2 bis 8 Kohlenstoffatomen,
- Y' eine Gruppe darstellt, die ausgewählt ist unter -OR⁴, -SR⁴ und -NR⁴R⁵, worin R⁴ und R⁵ jeweils einen Kohlenwasserstoffrest mit 1 bis 35 Kohlenstoffatomen oder ein Wasserstoffatom darstellen,
- X' ein Halogen darstellt,
- p eine beliebige Zahl ist, so dass 0 < p ≤ 2,5,
- q eine beliebige Zahl ist, so dass 0,5 < q < 3, wobei die Summe (p+q) so ist, dass 0,5 < (p+q) ≤ 3,
um ein flüssiges Material zu erhalten, das dann einer thermischen Behandlung, die in Gegenwart eines halogenierten Mittels durchgeführt wird, unterzogen wird.

4. Verfahren gemäß einem der Ansprüche 1 bis 3, bei dem der Träger (iii) mit einer Lösung in Kontakt gebracht wurde, die die Übergangsmetallverbindung (i) und den Aktivator (ii) enthält, um eine Suspension zu erhalten, die dann eingedampft wurde.

5. Verfahren gemäß einem der Ansprüche 1 bis 4, bei dem der Träger (iii) mit einer Lösung in Kontakt gebracht wird, die die Übergangsmetallverbindung (i) und den Aktivator (ii) enthält, um eine Suspension zu erhalten, die in einem Reaktor eingedampft wird, der ausgestattet ist mit einem Rührer, der ein Abstreifelement umfasst, das sich an die Reaktorwände so anpasst, dass der Abstand zwischen den Rändern dieses Elements, die den Reaktorwänden am nächsten sind, und besagten Wänden das 4- bis 50-fache des mittleren Durchmessers des Trägers ist, wobei besagter Rührer auch ein Element umfasst, das das Homogenisieren der Suspension sicherstellt, um einen pulverförmigen Feststoff zu erhalten.
